# EUROPÄISCHE PATENTSCHRIFT

(11) **EP 2 843 286 B1**
(45) Veröffentlichungstag und Bekanntmachung des Hinweises auf die Patenterteilung: **28.03.2018**
(21) Anmeldenummer: 14182644.6
(22) Anmeldetag: 28.08.2014
(51) Int. Cl.: F16L 59/153, F16L 11/127, F16L 11/22, F16L 53/00

(54) **Vorrichtung zum Transport eines Mediums**
Device for transporting a medium
Dispositif de transport d'un fluide

(30) Priorität: 28.08.2013 DE 102013217159
(43) Veröffentlichungstag der Anmeldung: 04.03.2015
(73) Patentinhaber: PSG Petro Service GmbH & Co. KG, 61449 Steinbach (DE)
(72) Erfinder: Hefter, Gerhard, 63110 Rodgau (DE)
(74) Vertreter: Kugler, Jörg

(56) Entgegenhaltungen:
- DE-A1- 2 918 144
- DE-A1- 19 808 278
- DE-B3-102005 037 183
- US-A1- 2006 081 301
- US-B1- 6 671 162

## Beschreibung

Die Erfindung betrifft eine Vorrichtung zum Transport eines Mediums, insbesondere eines Fluides, mit wenigstens einem sich in einer Axialrichtung erstreckendem Kanal, durch den das Medium geführt wird, und mit einem Außenmantel.
Derartige Vorrichtungen können beispielweise als Analysenleitungen ausgebildet sein, durch die eine Probe eines fluiden, insbesondere gasförmigen, Mediums, aber auch von Stäuben, zu von einer Probenahmestelle zu einer Analysenstation weitergeleitet wird, in der sie dann untersucht wird. Sie dienen dann gewissermaßen als Messleitungen im Rahmen von Probegasmessungen.
Eine Vorrichtung zum Transport von Fluiden, die als beheizbare Leitung ausgebildet ist, ist aus der EP 1 339 261 A2 bekannt. Dabei sind in unmittelbarer Nähe zur Innenseele der Leitung ein Wärmesensor bzw. eine Temperatursicherung vorgesehen. Eine Vorrichtung nach dem Oberbegriff des Anspruchs 1 ist aus der DE 198 08 278 A1 bekannt. In explosionsgefährdeten Bereichen bzw. Zonen, z.B. räumlichen Bereichen, in denen leicht entzündliche Gase oder Dämpfe entstehen besteht die Gefahr, dass aufgrund elektrostatischer Aufladung der Analysenleitung Zündfunken entstehen, die zu einer Explosion des Gas-, Dampf- und/oder Staubgemisches führen können. Derartige Zonen werden als Ex-Bereiche bezeichnet und kommen in unterschiedlichen Industriezweigen und Industriebereichen vor.
Die für diese Zonen bestehenden Sicherheitsvorschriften bestimmen, dass die Entstehung von elektrostatischen Aufladungen durch konstruktive Maßnahmen zu vermeiden ist. Bei bekannten Vorrichtungen ist dazu vorgesehen, dass der Mantel bzw. Außenmantel elektrisch geerdet wird. Dies wird erreicht durch die Wahl eines entsprechenden Mantelmaterials. Dazu wird beispielsweise dem Material des Außenmantels, der beispielsweise als elektrostatisch ableitender Wellschlauch aus Polyamid ausgebildet ist, Kohlenstoff hinzugefügt. Nachteilig bei einer derartigen Konfiguration ist, dass der Außenmantel dadurch in seinen Eigenschaften hinsichtlich seiner mechanischen Widerstandsfähigkeit beeinträchtigt wird bzw. werden kann.
Der Erfindung liegt daher die Aufgabe zugrunde, eine Vorrichtung der oben genannten Art dahingehend zu verbessern, dass elektrische Aufladungen und die Entstehung von Zündfunken verhindert werden, ohne dass diesbezüglich die Materialeigenschaften des Außenmantels verändert werden müssen.

Diese Aufgabe wird erfindungsgemäß mit den Merkmalen des Anspruchs 1 gelöst. Vorteilhafte Ausgestaltungen der Erfindung sind Gegenstand der Unteransprüche. Die Erfindung geht von der Überlegung aus, dass die Ableitung von elektrischen Ladungen über den dafür materialtechnisch präparierten Außenmantel einige Nachteile mit sich bringt. Neben der Beeinträchtigung der Eigenschaften des Mantels an sich, erfordert eine derartige Konfiguration auch in der Regel eine Vorkonfektionierung der Vorrichtung, da die Anfangs- und Endseite bzw. Proben- und Analysenseite mit Endkappen abgeschlossen sein müssen. Dadurch ist von vorne herein auch die Länge der Leitung festgelegt.

Die dadurch notwendig werdende äußere Ausgestaltung als Wellring birgt darüber hinaus die Gefahr, dass die Leitung beim Verlegen an Kanten oder Winkeln hängenbleibt und dadurch beschädigt wird. Bleibt eine derartige Beschädigung unbemerkt, kann dies neben der Beeinträchtigung des Probentransportes in explosiven Bereich auch zu gefährlichen Situationen wie beispielsweise Explosionen führen. Der Außenmantel sollte daher möglichst optimiert sein, die im Betrieb auftretenden Belastungen auszuhalten und schon vor Betriebnahme gut und ohne hohes Beschädigungsrisiko verlegbar zu sein.

Wie nunmehr erkannt wurde, lassen sich diese Zielsetzungen dadurch erreichen, dass eine vom Mantel getrennte elektrisch leitende Umhüllung verwendet wird. Durch den Potentialausgleich zwischen dieser Umhüllung mit Erdpotential, also die Erdung dieser Umhüllung, können Potentialdifferenzen vermieden werden, die zu der Entstehung von Zündfunken und somit zu Explosionen führen könnten. Die Umhüllung kann innen an dem Außenmantel direkt anliegen und ihn somit von innen berühren. Aus fertigungstechnischen Gründen kann aber zwischen Außenmantel und äußerer Umhüllung eine, insbesondere elektrisch leitende, Zwischenschicht, insbesondere eine Folie, die zusätzlichen Schutz bietet, vorgesehen sein. Die äußere Umhüllung ist vorzugsweise als Metallfolie ausgebildet, die gewissermaßen als elektrostatisch leitfähiger Schutzschirm fungiert.

Die Vorrichtung ist in einer besonders bevorzugten Ausführungsform als Analysenleitung zum Transport von Gasen, Flüssigkeiten und/oder Stäuben ausgestaltet. Besonders bevorzugt ist sie für Anwendungen im explosionsgefährdeten Bereich (Ex-Umgebung gemäß Richtlinie 94/9/EG). Die Dicke des Außenmantels beträgt weniger als 2,0 mm, wodurch das Auftreten von elektrostatischen Aufladungen ausgeschlossen werden kann.

Die Potentialausgleichsleiter bzw. Beidrähte sind bevorzugt aus Kupfer (CU-ETP1) und die innere und äußere Umhüllung sind vorzugsweise aus Aluminium gefertigt, d.h. als radial umhüllende, im Wesentlichen zylinderförmige Aluminiumfolie ausgebildet.

Zwischen dem Kanal und der äußeren Umhüllung ist eine elektrisch isolierende Zwischenschicht angeordnet. Die Zwischenschicht ist aus wärmedämmendem Material gefertigt und erfüllt auf diese Weise eine Doppelfunktion. Erfindungsgemäss ist der jeweilige Kanal von einer elektrisch leitenden inneren Umhüllung umgeben, die mit einem Potentialausgleichsleiter verbunden ist. Das heißt, zusätzlich zu der äußeren Umhüllung ist auch eine innere Umhüllung zum Abtransport von Ladungen vorgesehen. Eine derartige Konfiguration ist dann vorteilhaft, wenn auch insbesondere im Inneren der Vorrichtung, z.B. in den oder im Bereich der Kanäle, elektrische Aufladungen entstehen können. In Kombination damit oder alternativ dazu kann auch der jeweilige Kanal aus elektrisch leitfähigem Material, beispielsweise einem Nichteisenmetall (NE-Metall) bestehen und über einen Potentialausgleichsleiter geerdet sein, so dass direkt von dem Kanal Ladungen abfließen können. Wird der jeweilige elektrisch leitende Kanal direkt geerdet, könnte also auf eine innere elektrisch leitende Umhüllung gegebenenfalls verzichtet werden. Diese Ausführungsform ist jedoch nicht Teil der Erfindung. Die elektrisch isolierenden Zwischenschicht trennt die innere und die äußere Umhüllung bzw. isoliert sie elektrisch und thermisch gegeneinander. Der Aufbau der Vorrichtung von innen nach außen in radialer Richtung ist: innerer Kanal, innere Umhüllung, Zwischenschicht, äußere Umhüllung, Außenmantel.

Zur Ableitung von elektrischer Ladung in den Erdboden sind vorteilhafterweise die Potentialausgleichsleiter mit einem Erdungssystem, insbesondere mit einer oder mehrerer Erdungsschienen, verbunden. Dadurch wird die Bildung einer Potentialdifferenz der Vorrichtung gegenüber dem Erdpotential vermieden und somit die Entstehung von Funkenentladung, was in explosionsgefährdeten Bereichen ebenso vermieden werden muss wie Zündfunken innerhalb der Analysenleitung, durch die sich das Fluid entzünden könnte. Eine Verbindung der elektrisch leitenden Komponenten an ein Erdungssystem sorgt nun für einen Potential- bzw. Ladungsausgleich mit dem Erdpotential, so dass die Gefahr von plötzlichen und blitzartigen elektrischen Funkentladungen gebannt wird.

Die Wahl des Materials des Mantels bzw. Außenmantels erfolgt bevorzugt aufgrund physikalisch-technischer Umgebungseigenschaften. Der Mantel ist aus einem thermoplastischen Kunststoff, insbesondere PVC, TPU, PE, gefertigt.

Der jeweilige Kanal bzw. das jeweilige Medienrohr ist vorzugsweise aus Polypropylen Kunststoff bzw. thermoplastischem Kunststoff gefertigt, insbesondere aus PTFE, PFA, oder PVDF. Alternativ dazu kann er auch aus einem NE Metall oder einer Metalllegierung, insbesondere legiertem oder hochlegiertem Edelstahl gefertigt sein. Ein anderes geeignetes Material ist Titan. Die Materialwahl richtet sich nach dem zu transportierenden Medium bzw. Fluid; insbesondere bei chemisch aggressiven bzw. chlorhaltigen Gasen eignen sich Metalle bzw. Metallische Legierungen. Typische Kanaldurchmesser bei industriellen Anwendungen reichen von 4 mm bis 20 mm.

Bevorzugt ist eine Heizvorrichtung zur Temperierung des Mediums vorgesehen. Durch eine Heizung des Fluides kann eine Auskondensation des Fluides oder Anteilen davon während des Transportes durch den Kanal verhindert werden. Auf diese Weise wird ermöglicht, eine in der Vorrichtung zu transportierende Probe in ihrer ursprünglichen Zusammensetzung zu einer Untersuchungseinrichtung bzw. Analysenstation zu transportieren.

Bei der Ausführung mit einer Heizvorrichtung sind vorzugsweise sowohl die Heizvorrichtung als auch der jeweilige Kanal von der inneren Umhüllung umgeben. Auf diese Weise besteht ein direkter Kontakt zwischen der Heizvorrichtung und den Kanälen, so dass die Wärme direkt auf das Medium übertragen werden kann. Dadurch lässt sich auch die Wärmeentwicklung in dem jeweiligen Kanal besser berechnen bzw. vorhersehen und somit besser einregeln. Dies wäre aufgrund einer gegebenenfalls vorliegenden wärmeisolierenden Wirkung der inneren Umhüllung deutlich schwieriger.

Die Heizvorrichtung ist vorzugsweise als selbstregulierende Heizvorrichtung ausgebildet, das heißt, einmal auf eine gewünschte Solltemperatur eingestellt bzw. vorkonfiguriert wird diese Temperatur nur durch das Verhalten bzw. die Eigenschaften der Heizvorrichtung an sich und ohne externe Steuer- und Regelvorgänge gehalten. Alternativ dazu kann auch eine Steuer- und Regeleinheit vorgesehen sein, die die Temperatur des Mediums auf eine gewünschte Solltemperatur einregelt, wozu Temperaturfühler benutzt werden, die die Ist-Temperatur messen. Die Heizvorrichtung weist dann vorzugsweise Mittel zur Regelung der Temperatur auf, wobei durch Temperaturfühler der Ist-Wert der Temperatur bestimmt wird und durch eine elektronische Steuer- und Regeleinheit durch Variation der Stromstärke bzw. Spannung die gewünschte Temperatur eingeregelt wird. Vorteilhafterweise können auch Maximal- und/oder Minimaltemperatur angegeben werden, die nicht über- bzw. unterschritten werden dürfen.

Die Heizvorrichtung ist bevorzugt als Heizband ausgestaltet, welches an dem jeweiligen Kanal anliegt. Eine derartige Konfiguration erlaubt eine bauraumoptimierte Temperierung des Fluides in dem Kanal. Für eine gleichmäßige und konstante Heizung ist das Heizband vorzugsweise entlang des gesamten Kanals angeordnet. Die Heizfunktion wird vorteilhafterweise durch zwei in dem Heizband bzw. dem Heizbandkörper geführte Heizleiter erzeugt, die sich bei Anlegen einer Spannung durch den Ladungstransport erwärmen. Das Heizband ist vorzugsweise selbstregulierend, so dass sich beispielsweise die Eigenschaften des Materials des Heizbandkörpers in Abhängigkeit von der Temperatur so ändern, dass sich daraus ein Stromfluss ergibt, der zu der gewünschten Temperatur führt. Das Material des Heizbandes umfasst dann bevorzugt direkt leitende Polymere.

Alternativ zu einem Heizband kann die Heizvorrichtung auch als eine Anzahl von Heizrohren ausgebildet sein, die beispielsweise dampfbeheizt sind. Das heißt, durch das jeweilige Heizrohr wird heißer Dampf geleitet, der zumindest teilweise seine Wärme an das Fluid abgibt. Bevorzugt ist genau ein Dampfrohr vorgesehen, das an möglichst allen Kanälen direkt anliegt.

Die elektrisch isolierende Zwischenschicht, die zwischen der inneren und der äußeren Umhüllung angeordnet ist, ist aus wärmedämmendem Material gefertigt. Als Material eignet sich insbesondere Thermo- oder Glasfaserflies oder auch Kombinationen der beiden, sowie Silikon oder Silikonschaum.

Die Vorteile der Erfindung liegen insbesondere darin, dass durch die Verwendung einer separaten und elektrisch isolierten elektrisch leitenden Umhüllung, bei der ein Potentialausgleich durchgeführt wird, die materialmäßige Zusammensetzung des Außenmantels erhalten bleiben kann bzw. nicht modifiziert werden muss. Damit kann der Außenmantel in seiner Materialwahl hinsichtlich seiner Schutz-, Belastungs- und Beständigkeitseigenschaften optimiert werden.

Ein Ausführungsbeispiel der Erfindung wird anhand einer Zeichnung näher erläutert. Darin zeigen in stark schematisierter Darstellung:
Fig. 1 eine Vorrichtung zum Transport eines Mediums in einer bevorzugten Ausführungsform, und
Fig. 2 einen Querschnitt durch eine Vorrichtung in einer weiteren bevorzugten Ausführungsform.

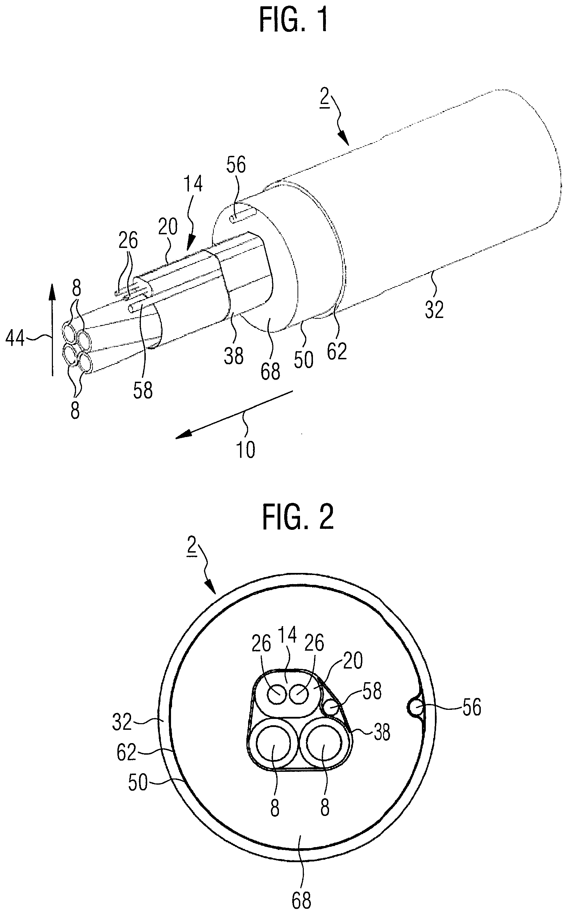

Gleiche Teile sind in beiden Figuren mit denselben Bezugszeichen versehen. Eine Vorrichtung zum Transport eines Mediums 2 ist als Analysenleitung ausgestaltet und in Fig. 1 perspektivisch dargestellt, wobei die inneren, nicht sichtbaren Komponenten durch einen perspektivischen Schnitt sichtbar gemacht sind. Die Vorrichtung 2 dient zum Transport von Gasproben von einer Probeentnahmestelle zu einer Analyseneinrichtung, wobei Distanzen von mehreren Hundert Metern zurückgelegt werden können. Zum Transport des Gases in oder entgegengesetzt zu einer Axialrichtung 10 sind vier rohrförmige Kanäle 8 bzw. Gasleiter vorgesehen, die aus PE-Material hergestellt sind. Zur Temperierung des Gases innerhalb der Kanäle 8 ist ein Heizband 14 vorgesehen, welches einen Heizbandkörper 20 und zwei in den Heizbandkörper 20 eingelassene Heizleiter 26 umfasst. Das Heizband 14 ist als elektrisches, selbstregelndes Heizband ausgebildet. Der Heizbandkörper 20 besteht aus leitenden Polymeren, die mit leitfähigem Ruß gemischt sind. Die Heizbandleistungen betragen zwischen 16 W/m bis 64 W/m bei 10°C. Der zur Beheizung des Mediums notwendige Strom hängt ab von der Länge des Heizbandes.

Alternativ kann auch ein Heizband vorgesehen sein, bei dem die Temperatur von einer Steuer- und Regeleinheit geregelt wird. Zur Temperaturerfassung sind dann Temperaturfühler an der Außenseite des Innenrohres montiert. Einerseits ist eine Begrenzung der Maximaltemperatur vorgesehen, andererseits erfolgt auch eine Regelung der Temperatur. Dabei wirkt sich die Maximaltemperatur gewissermaßen als Zwangsbedingung auf die Regelung aus, d.h. es wird sichergestellt, dass die gemessene Höchsttemperatur nicht überschritten wird. Damit diese auch der tatsächlich höchstmöglich vorkommenden Temperatur entspricht, sollte der oder sollten die Temperaturfühler im räumlichen Bereich der höchsten vorkommenden Umgebungstemperaturen platziert werden. Für Anwendungen, bei denen eine Mindesttemperatur nicht unterschritten werden sollte, sollte der Temperaturfühler an der Stelle mit der niedrigsten Umgebungstemperatur installiert werden.

Der Begrenzer wird in der Regel auf die maximal (oder minimal) zulässige Temperatur eingestellt. Es können auch zwei Temperaturfühler eingesetzt werden, wobei der eine Temperaturfühler zur Begrenzung auf eine Minimaltemperatur und der andere Temperaturfühler zur Begrenzung auf eine Maximaltemperatur eingesetzt wird. Eine derartige Konfiguration eignet sich für Zonen mit stark schwankenden Umgebungstemperaturen. Der Regelungsprozess wird dann unter der Maßgabe durchgeführt, dass die Maximal- und/oder Minimaltemperatur dabei nicht über- bzw. unterschritten wird.

Die Vorrichtung 2 weist weiterhin einen Außenmantel 32 auf, der die inneren Komponenten gegenüber äußeren Einflüssen, Beschädigungen, Belastungen etc. abschirmt.

Die Analysenleitung ist dazu ertüchtigt, in explosivgefährdeten Bereichen eingesetzt zu werden. Das Material des Außenmantels 32 kann dabei in optimierter Weise derart gewählt werden, um Schutzwirkungen zu entfalten und Beschädigungen so gering wie möglich zu machen. Im Gegensatz zu bekannten Lösungen wird er nicht verwendet, um die Analysenleitung zu erden.

Es sind nämlich eigenständige bzw. zusätzliche Komponenten vorgesehen, die die Entstehung von Zündfunken vermeiden. Die Vorrichtung 2 weist dazu eine innere Umhüllung 38 auf, die vorliegend als Aluminiumfolie ausgebildet ist. In einer Radialrichtung 4 gesehen ist innerhalb des Außenmantels 32 außerhalb der inneren Umhüllung 38 eine äußere Umhüllung 50 vorgesehen, welche ebenfalls als Aluminiumfolie ausgebildet ist. Die innere Umhüllung 38 und die äußere Umhüllung 50 erstrecken sich zylinderförmig entlang der Axialrichtung 10.

Die innere Umhüllung 38 und die äußere Umhüllung 40 sind jeweils durch einen Potentialausgleichsleiter 58, 56 mit einem Erdungssystem verbunden, so dass beide Umhüllungen 38, 50 erstens das gleiche elektrische Potential aufweisen und zweitens dieses Potential mit dem Erdpotential identisch ist, so dass keine Potentialdifferenz gegenüber Erde besteht. Das bedeutet, wenn sich auf einer der beiden Umhüllungen 38, 50 elektrische Ladungen sammeln, erfolgt über den jeweiligen Potentialausgleichsleiter 58, 56 ein Ladungsausgleich gegen Erde. Auf diese Weise werden Zündfunken bzw. elektrische blitzartige Entladungen verhindert. Diese könnten beispielsweise entstehen, wenn sich im Kanal 8 elektrische Ladungen trennen und dieser somit elektrisch aufgeladen wird und kein Potentialausgleich zum Außenmantel erfolgen würde. Der Außenmantel wird bevorzugt auf die äußere Umhüllung drüber geschoben, insbesondere extrudiert.

Zwischen Außenmantel 32 und äußerer Umhüllung 50 ist eine die äußere Umhüllung umgebende Schicht 62 vorgesehen, die aus einer PETP-Folie besteht. Diese Schicht 62 ist aus produktionstechnischen Gründen vorgesehen, um beim Produktionsprozess der Analysenleitung Beschädigungen der äußeren Umhüllung 50 zu vermeiden. Sie fungiert somit gewissermaßen als Schutzschicht und erfüllt darüber hinaus im vorliegenden Ausführungsbeispiel keine technische Funktion. Die gesamte Wanddicke der Analysenleitung, also die Summe der Wanddicken von Außenmantel 32 und Schicht 62 ist geringer als 2,0 mm, um zuverlässig elektrostatische Aufladungen des Außenmantels 62 zu verhindern. Die Dicke der Schlauchhülle bzw. des Außenmantels 32 beträgt im vorliegenden Ausführungsbeispiel 1,8 mm, die Dicke der Schutzfolie bzw. Schicht 62 beträgt 0,05 mm.

In Radialrichtung 44 gesehen ist zwischen der inneren Umhüllung 38 und der äußeren Umhüllung 50 eine elektrisch isolierende Zwischenschicht 68 aus Thermoflies angeordnet. Die Zwischenschicht 68 erfüllt also eine Doppelfunktion: Einerseits dient sie der elektrischen Isolation der beiden Umhüllungen 38, 50. Andererseits sorgt sie für eine Wärmeisolierung der beheizten Kanäle 8, so dass zu ihrer Beheizung Energie gespart werden kann. Weiterhin werden dadurch die Kanäle von äußeren Temperatureinflüssen abgeschirmt, so dass geringere Schwankungen der Temperatur des Fluides auftreten.

Die in Fig. 2 dargestellte Ausführungsform der Analysenleitung weist statt vier nur zwei Kanäle 8 auf, entspricht aber in ihrer sonstigen Ausgestaltung der in Fig. 1 dargestellten Analysenleitung.

Die beiden Enden der Vorrichtung 2 (Probenende, Analysenende) werden mit vorzugsweise Endkappen versehen. Dabei werden vorzugsweise schrumpfbare Endkappen verwendet, die einen Schutz gegen Eindringen von Feuchtigkeit und Staub bieten.

Die Vorrichtung 2 wird als ein auf einer Kabeltrommel aufgewickeltes bzw. aufgerolltes Rohrbündel bereitgestellt, das zum Verlegen dann vorsichtig von der Trommel abgespult wird.

### Bezugszeichenliste

- 2: Vorrichtung
- 8: Kanal
- 10: Axialrichtung
- 14: Heizband
- 20: Heizbandkörper
- 26: Heizleiter
- 32: Außenmantel
- 38: innere Umhüllung
- 44: Radialrichtung
- 50: äußere Umhüllung
- 56: Potentialausgleichsleiter
- 58: Potentialausgleichsleiter
- 62: Schicht
- 68: Zwischenschicht

## Patentansprüche

1. Vorrichtung (2) zum Transport eines Mediums, mit wenigstens einem sich in einer Axialrichtung (10) erstreckendem Kanal (8), durch den das Medium geführt wird,
wobei der jeweilige Kanal (8) von einer elektrisch leitenden inneren Umhüllung (38) umgeben ist, die mit einem Potentialausgleichsleiter (58) verbunden ist, und mit einem Außenmantel (32)dessen Dicke weniger als 2mm beträgt, **dadurch gekennzeichnet, dass**
zwischen dem
Kanal (8) und dem Außenmantel (32) eine elektrisch leitende äußere Umhüllung (50) vorgesehen ist, dass die äußere Umhüllung (50) mit einem elektrisch leitenden Potentialausgleichsleiter (56) verbunden ist,
dass zwischen dem Kanal (8) und der äußeren Umhüllung (50) eine elektrisch isolierende Zwischenschicht (68) angeordnet ist,
dass die Zwischenschicht (68) aus wärmedämmendem Material und der Außenmantel (32) aus einem thermoplastischen Kunststoff gefertigt ist.

2. Vorrichtung (2) nach Anspruch 1, wobei der jeweilige Potentialausgleichsleiter (56, 58) mit einem Erdungssystem verbindbar ist.

3. Vorrichtung (2) nach einem Anspruch 1 oder 2, wobei wenigstens ein Kanal (8) aus thermoplastischem Kunststoff gefertigt ist.

4. Vorrichtung (2) nach einem der Ansprüche 1 bis 3, wobei wenigstens ein Kanal (8) aus einer Metalllegierung gefertigt ist.

5. Vorrichtung (2) nach einem der Ansprüche 1 bis 4, wobei eine Heizvorrichtung zur Temperierung des Mediums vorgesehen ist.

6. Vorrichtung (2) nach Anspruch 5, wobei die Heizvorrichtung als Heizband (14) ausgestaltet ist, welches an dem jeweiligen Kanal (8) anliegt.

## Claims

1. A device (2) for transporting a medium, having at least one channel (8) extending in an axial direction (10), through which the medium is conducted,
wherein the respective channel (8) is surrounded by an electrically conductive inner covering (38), which is connected with a potential equalization conductor (58),
and having an outer sheathing (32), whose thickness is less than 2 mm,
**characterized in**
**that** an electrically conductive outer covering (50) is provided between the channel (8) and the outer sheathing (32),
**that** die outer covering (50) is connected with an electrically conductive potential equalization conductor (56),
**that** an electrically insulating intermediate layer (68) is arranged between the channel (8) and the covering (50)
**that** the intermediate layer (68) is made of a heat-insulating material and the outer sheathing (32) is made of a thermoplastic synthetic material.

2. The device (2) of claim 1, wherein the respective potential equalization conductor (56, 58) can be connected with a grounding system.

3. The device (2) of any of claims 1 or 2, wherein at least one channel (8) is made of a thermoplastic synthetic material.

4. The device (2) of any of claims 1 to 3, wherein at least one channel (8) is made of a metallic alloy.

5. The device (2) of any of claims 1 to 4, wherein a heating device is provided for bringing the medium to the right temperature.

6. The device (2) of claim 5, wherein die heating device is designed as a heating tape (14) resting on the respective channel (8).

## Revendications

1. Dispositif (2) de transport d'un fluide, ayant au moins un canal (8) qui s'étend dans une direction axiale (10) et au travers duquel le fluide est conduit,
dans lequel le canal (8) respectif est enveloppé par une envelope intérieure (38) électriquement conductrice, qui est reliée à un conducteur d'équipotentialité (58), et ayant une gaine extérieure (32), dont l'épaisseur est moinsde 2 mm,
**caractérisé en ce**
**qu'**une enveloppe extérieure (50) électriquement conductrice est prévue entre le canal (8) et la gaine extérieure (32),
**que** l'enveloppe extérieure (50) est reliée à un conducteur d'équipotentialité (56) électriquement conducteur
**qu'**une couche intermédiaire (68) électriquement isolante est disposée entre le canal (8) et l'enveloppe (50)
**que** la couche intermédiaire (68) est fabriquée d'une matière thermo-isolante et la gaine extérieure (32) est fabriquée d'une matière synthétique thermoplastique.

2. Dispositif (2) selon la revendication 1, dans lequel le conducteur d'équipotentialité (56, 58) respectif peut être relié à un système de prise de terre.

3. Dispositif (2) selon l'une quelconque des revendications 1 ou 2, dans lequel au moins un canal (8) est fabriqué d'une matière synthétique thermoplastique.

4. Dispositif (2) selon l'une quelconque des revendications 1 à 3, dans lequel au moins un canal (8) est fabriqué d'un alliage métallique.

5. Dispositif (2) selon l'une quelconque des revendications 1 à 4, dans lequel un dispositif de chauffage est prévu pour mettre le fluide à la correcte température.

6. Dispositif (2) selon la revendication 5, dans lequel le dispositif de chauffage est conçu comme un collier chauffant (14) qui s'appuie contre le canal (8) respectif.
